# FASCICULE DE BREVET EUROPEEN

(11) **EP 3 798 521 B1**
(45) Date de publication et mention de la délivrance du brevet: **28.02.2024**
(21) Numéro de dépôt: 20199184.1
(22) Date de dépôt: 30.09.2020
(51) Int. Cl.: F24D 17/00, F24D 1/08

(54) **BACHE A CONDENSATS A NIVEAU DYNAMIQUE**
KONDENSAT-ABLAUFABDECKUNG MIT DYNAMISCHEM PEGEL
CONDENSATE TANK WITH DYNAMIC LEVEL

(30) Priorité: 30.09.2019 FR 1910767
(43) Date de publication de la demande: 31.03.2021
(73) Titulaire: SPIREC, 78500 Sartrouville (FR)
(72) Inventeur: REKUT, Jérôme, 78250 Hardricourt (FR)
(74) Mandataire: Oudin, Stéphane

(56) Documents cités:
- WO-A1-2011/060524
- DE-A1- 3 029 181
- FR-A1- 2 660 988

## Description

### Domaine technique de l'invention

La présente invention se rapporte au domaine général du stockage, de la récupération et de la réutilisation des condensats générés par la condensation de vapeur industrielle. Elle vise plus précisément un réservoir, communément appelé bâche, optimisé pour le stockage desdits condensats.

### Etat de la technique

On sait que la chaleur latente de vapeur, notamment industrielle, correspond à l'énergie nécessaire pour transformer l'eau en vapeur, également connue sous le nom d'enthalpie ou chaleur de vaporisation. De même, on sait que l'eau devient de la vapeur en absorbant la chaleur latente, et au contraire qu'en libérant cette chaleur latente pour chauffer un produit, une ligne, ou un équipement, la vapeur redevient de l'eau à haute température, nommée condensat. Cette grande quantité continue d'eau à température élevée, de l'ordre de 95-100°C, est l'une des principales raisons de la récupération et de la réutilisation des condensats. En effet, cette eau à température élevée permet de réaliser d'importantes économies d'énergie, de traitement chimique et d'eau d'appoint. Ainsi, il est, par exemple, connu d'utiliser de l'eau à température élevée pour chauffer de l'eau chaude sanitaire grâce à l'échangeur thermique, classiquement du type à plaques, d'un préparateur d'eau chaude sanitaire (ECS).

Toutefois, les bâches connues, qui ne sont que de simples réservoirs métalliques munis d'un détecteur de niveau haut maximal qui déclenche la mise en route d'une pompe de vidange jusqu'à un niveau bas prédéterminé, ne permettent en aucun cas une réutilisation des condensats en optimisant l'apport calorique des derniers au niveau, par exemple, de l'échangeur thermique d'un préparateur ECS.

Le document WO2011/060524 A1 divulgue une bâche de stockage des condensats à haute température selon le préambule de la revendication 1.

### Résumé de l'invention

Le but de la présente invention est de proposer une bâche de stockage, de récupération et de réutilisation des condensats issus de générateurs de vapeur industrielle permettant une optimisation de leur apport calorique au niveau de l'échangeur thermique dudit préparateur ECS, ladite bâche à condensats étant particulièrement compacte, facile à mettre en oeuvre et efficace pour garantir un parfait fonctionnement dudit préparateur ECS.

Conformément à l'invention, il est donc proposé une bâche de stockage des condensats à haute température remarquable en ce qu'elle comporte au moins :
- un ensemble entrée - sortie de raccordement à un échangeur thermique, la sortie permettant un transfert des condensats contenus dans la bâche vers l'entrée dudit échangeur thermique et l'entrée permettant un retour des condensats dans ladite bâche,
- une évacuation permettant l'évacuation d'au moins une partie des condensats contenus dans ladite bâche,
- des piquages pour la mise en place d'au moins une sonde de température et d'une sonde de niveau mesurant respectivement la température T et le niveau N des condensats contenus dans ladite bâche,
- une admission de condensats à haute température dans la bâche, et
- une unité de commande configurée pour gérer ladite température T grâce à la gestion dynamique du niveau N par le contrôle de l'évacuation des condensats en fonction :
- des apports caloriques des condensats à haute température entrant par l'admission, et
- des déperditions de chaleur dues au retour dans ladite bâche par l'entrée des condensats en provenance de l'échangeur thermique.

L'ensemble entrée - sortie et l'évacuation sont de préférence disposés en bas de la bâche.

L'évacuation est avantageusement raccordée à une pompe de relevage pilotée par l'unité de commande.

Selon un mode de réalisation avantageux, l'admission comporte un tube débouchant sur le haut de la bâche et plongeant vers le bas de cette dernière.

La bâche comporte en outre un évent, un trop plein, un orifice de vidange, et une ou deux arrivée(s) supérieure(s) de purge.

La bâche est de préférence en forme globale de parallélépipède verticalement allongé. Selon un mode de réalisation avantageux, la bâche comporte une couche d'isolant thermique externe.

### Brève description des figures

D'autres avantages et caractéristiques ressortiront mieux de la description qui va suivre d'un mode d'exécution de l'invention en référence aux figures annexées sur lesquelles :
[Fig 1] est une vue en perspective d'une bâche à condensats selon l'invention,
[Fig 2] est une vue avant partielle de la bâche à condensats de la figure 1,
[Fig 3] est une vue de gauche partielle de la bâche à condensats de la figure 1,
[Fig 4] est une vue en perspective éclatée de bâche à condensats de la figure 1.

### Description des modes de réalisation

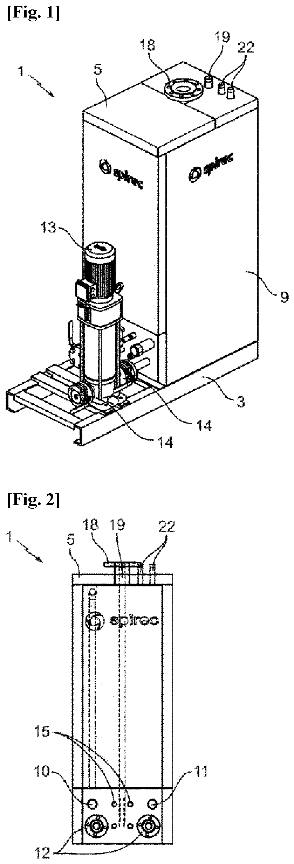

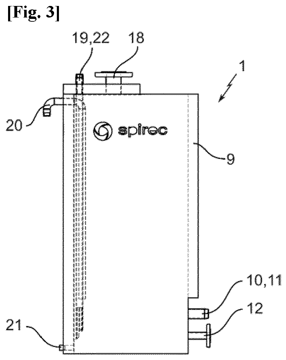

En référence aux figures 1 à 4, l'invention concerne une bâche 1 de stockage des condensats à haute température, de l'ordre de 90-100°C, générés principalement par la condensation de vapeur industrielle.

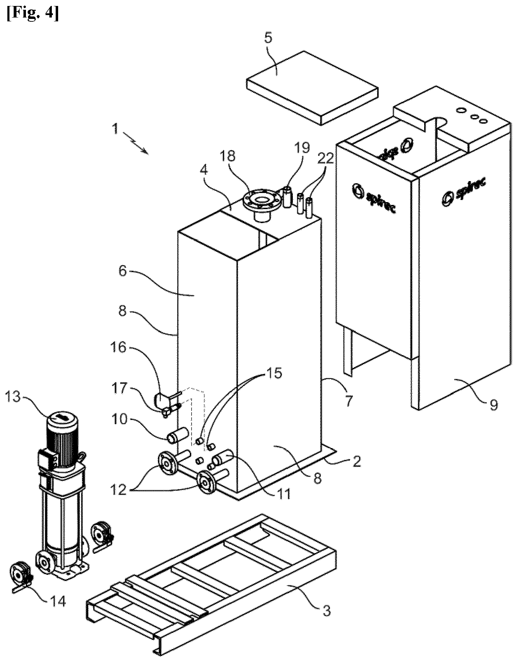

Ladite bâche 1 est en forme globale de parallélépipède creux verticalement allongé et comportant un fond 2 globalement rectangulaire reposant sur un châssis 3, un dessus 4 globalement rectangulaire et étant au moins en partie amovible par le biais d'un couvercle 5 et quatre faces verticales reliant les bords en vis-à-vis du fond 2 et du dessus 4, à savoir : une face avant 6, une face arrière 7 et deux faces latérales 8 (Cf. figure 4).

La bâche 1 selon l'invention comporte avantageusement une couche d'isolant thermique 9 externe recouvrant au moins son dessus 3 et ses faces avant 5, arrière 6 et latérales 8.

La bâche 1 selon l'invention comporte également un certain nombre de brides, de piquages et autres tubes permettant le raccordement de ladite bâche 1 à différents équipements.

Ainsi, la bâche 1 comporte un ensemble entrée 10 - sortie 11 disposé avantageusement en bas de la face avant 6 et permettant le raccordement, par exemple, à un échangeur thermique, non représenté d'un préparateur d'eau chaude sanitaire (ECS) ou à un échangeur de préchauffage ECS. La sortie 11 permet un transfert des condensats à haute température contenus dans la bâche 1 vers l'entrée de l'échangeur thermique et l'entrée 10 permet un retour des condensats à température plus basse dans ladite bâche 1 depuis la sortie dudit échangeur thermique, la différence de température entre les condensats à haute température sortant de la bâche 1 et ceux retournant dans cette dernière étant, de manière classique, comprise entre 20 et 40°C. Toutefois, on comprend bien que cette différence de température est variable en fonction notamment de la température des condensats générés par la condensation de vapeur industrielle et du débit de l'ECS au niveau de l'échangeur thermique.

En outre, la bâche 1 comporte au moins une évacuation 12 disposée avantageusement en bas de la face avant 6 et permettant le raccordement à une pompe de relevage 13 permettant, si besoin, l'évacuation d'au moins une partie des condensats contenus dans ladite bâche 1 soit vers les égouts, soit vers les fournisseurs de vapeur industrielle. Dans l'exemple de réalisation représenté, la bâche 1 comporte avantageusement une autre évacuation 12 apte à être raccordée, le cas échéant, à une autre pompe de relevage 13. Chaque pompe de relevage 13 repose sur le châssis 3 et est associée à des vannes d'arrêt 14 permettant d'isoler ladite pompe de relevage 13 par rapport à ladite bâche 1 et/ou aux autres équipements disposés en aval de la pompe de relevage 13. La bâche 1 comporte également des piquages 15 disposés avantageusement en bas de la face avant 6 et permettant la mise en place d'au moins une sonde de température 16 et d'une sonde de niveau 17 permettant de mesurer respectivement la température T et le niveau N des condensats contenus dans ladite bâche 1. Ladite sonde de niveau 17 mesure en temps réel le niveau des condensats contenus dans ladite bâche 1 et est associé à une unité de commande, non représentée, afin notamment de :
- vider la bâche 1, à l'aide de la pompe de relevage 13, lorsque le niveau des condensats contenus dans ladite bâche 1 atteint un niveau haut prédéterminé de cette dernière,
- stopper la pompe de relevage 13 lorsque le niveau des condensats contenus dans la bâche 1 atteint un niveau bas prédéterminé de cette dernière, ou encore
- déclencher une alerte lorsque le niveau des condensats contenus dans la bâche 1 atteint un niveau critique de sécurité étant inférieur audit niveau bas et pouvant provoquer le désamorçage de la pompe de relevage 13.

La bâche 1 comporte en outre un évent 18 disposé avantageusement en partie haute sur son dessus 4 et permettant le raccordement à une tuyauterie, non représentée, pour l'évacuation des vapeurs générées par les condensats en partie haute de ladite bâche 1. De plus, la bâche 1 comporte une admission 19 dans cette dernière de condensats à haute température provenant, de manière continue (débit des condensats étant de manière classique de l'ordre de 1m3 par heure), de la condensation de vapeur industrielle. Cette admission 19 comporte avantageusement un tube débouchant sur le haut de la bâche 1 et plongeant vers le bas de cette dernière.

Enfin, de manière classique, la bâche 1 comporte également un trop plein 20 en forme de canne plongeante débouchant sur la face arrière 7, un orifice de vidange 21 obturé par un bouchon amovible, non représenté, et une ou deux arrivée(s) supérieure(s) 22 permettant une purge manuelle ou automatique d'une bouteille haute pression (HP), cette dernière étant installée en amont des échangeurs vapeur pour protéger l'installation en séparant les condensats de la vapeur.

La position des différentes piquages, brides et autres tubes décrits précédemment pourra évidemment être différente sans sortir du cadre de la présente invention.

On comprend bien que plus les condensats contenus dans la bâche 1 et sortant par la sortie 11 ont une température T élevée, plus l'échange thermique au niveau de l'échangeur thermique sera efficace. Par ailleurs, on comprend également bien que, durant l'échange thermique, les condensats ont transféré une partie de leur énergie calorifique et que, par conséquent, ils retournent dans ladite bâche 1 par l'entrée 10 à une température T'inférieure à ladite température T, ce qui a pour effet de refroidir les condensats contenus dans la bâche 1. Ainsi, au fil du temps, la température T des condensats contenus dans la bâche 1 va varier en fonction :
- des apports caloriques des condensats à haute température provenant de la condensation de vapeur industrielle et entrant dans la bâche 1 par son admission 19,
- des déperditions de chaleur dues au retour dans ladite bâche 1 par l'entrée 10 des condensats à une température T' en provenance de l'échangeur thermique, et
- de la variation du volume de condensats contenus dans la bâche 1 du fait de la variation du niveau N desdits condensats contenus.

L'objet de la bâche 1 selon l'invention est d'optimiser l'efficacité de l'échange thermique au niveau de l'échangeur thermique en faisant en sorte que la température T des condensats contenus dans la bâche 1 et aptes à sortir par la sortie 11 soit toujours la plus élevée possible. Pour cela, l'unité de commande permet une gestion de ladite température T mesurée par la sonde de température 16 grâce à la gestion dynamique du niveau N des condensats contenus dans la bâche 1 mesuré par la sonde de niveau 17.

Ainsi, lorsque la température T des condensats contenus dans la bâche 1 est basse, c'est-à-dire inférieure à une température Tmin minimale prédéterminée, l'unité de commande régule le niveau N de condensats dans la bâche 1 à un niveau minimal Nmin grâce à la pompe de relevage 13.

A l'inverse, lorsque la température T des condensats contenus dans la bâche 1 est élevée, c'est-à-dire supérieure à une température Tmax maximale prédéterminée, l'unité de commande régule le niveau de condensats dans la bâche 1 à un niveau maximal Nmax en actionnant la pompe de relevage 13.

Ensuite, lorsque la température T des condensats contenus dans la bâche 1 est comprise entre la température Tmin et la température Tmax, l'unité de commande va réguler le niveau de condensats dans la bâche 1 à un niveau N compris entre les niveaux Nmin et Nmax, N étant d'autant plus élevé que la température T est élevée. Enfin, on comprend bien que le but de la maitrise du niveau N de condensats dans la bâche 1 est de maximiser la température T des condensats contenus dans la bâche 1, dans la mesure où, d'une manière générale, on ne maitrise ni la température des condensats provenant de la condensation de vapeur industrielle et entrant dans la bâche 1, ni leur débit.

De même, puisqu'on ne peut maîtriser l'échange thermique dans l'échangeur thermique associé à la bâche 1, la maitrise du niveau N de condensats dans la bâche 1 permet de maîtriser la température T des condensats contenus dans la bâche 1, et donc d'optimiser l'échange thermique dans ledit échangeur associé.

On comprend bien, d'une part, que la température T des condensats contenus dans la bâche 1 n'est maîtriser que par la gestion dynamique du niveau N par le contrôle de l'évacuation des condensats et, d'autre part, que cette gestion dynamique du niveau N est réalisée en fonction des apports caloriques des condensats à haute température entrant dans ladite bâche 1 par l'admission 19, et des déperditions de chaleur dues au retour dans ladite bâche 1 par l'entrée 10 des condensats en provenance de l'échangeur thermique. Concernant ce dernier point, l'Homme du Métier comprend bien que l'unité de commande de la bâche 1 selon l'invention doit notamment tenir compte du débit et de la température des condensats provenant de la condensation de vapeur industrielle. Pour cela, l'unité de commande doit avantageusement pouvoir interagir avec la pompe de transfert, non représentée, des condensats provenant de la condensation de vapeur industrielle.

Enfin, on comprend bien que la température T et le niveau N des condensats contenus dans la bâche 1 selon l'invention ne peuvent être gérés indépendamment.

Le bâche 1 de stockage des condensats à haute température selon l'invention est plus particulièrement associée à un échangeur thermique d'un préparateur d'eau chaude sanitaire.

Enfin, il va de soi que les exemples de bâche 1 conformes à l'invention qui viennent d'être décrits ne sont que des illustrations particulières, en aucun cas limitatives de l'invention qui est définie par les revendications.

## Revendications

1. Bâche (1) de stockage des condensats à haute température, la bâche comportant au moins :
- un ensemble entrée (10) - sortie (11) de raccordement à un échangeur thermique, la sortie (11) permettant un transfert des condensats contenus dans la bâche (1) vers l'entrée dudit échangeur thermique et l'entrée (10) permettant un retour des condensats dans ladite bâche (1),
- une évacuation (12) permettant l'évacuation d'au moins une partie des condensats contenus dans ladite bâche (1),
- des piquages (15) pour la mise en place d'au moins une sonde de température (16) et d'une sonde de niveau (17) permettant de mesurer respectivement la température T et le niveau N des condensats contenus dans ladite bâche (1),
- une admission (19) de condensats à haute température dans la bâche (1), et
- une unité de commande configurée pour gérer ladite température T,
**caractérisée en ce que** l'unité de commande est configurée pour gérer ladite température T
grâce à la gestion dynamique du niveau N par le contrôle de l'évacuation (12) des condensats en fonction :
- des apports caloriques des condensats à haute température entrant par l'admission (19), et
- des déperditions de chaleur dues au retour dans ladite bâche (1) par l'entrée (10) des condensats en provenance de l'échangeur thermique.

2. Bâche (1) selon la revendication 1 **caractérisée en ce que** l'ensemble entrée (10) - sortie (11) et l'évacuation (12) sont disposés en bas de la bâche (1).

3. Bâche (1) selon l'une quelconque des revendications 1 ou 2 **caractérisée en ce que** l'évacuation (12) est raccordée à une pompe de relevage (13) pilotée par l'unité de commande.

4. Bâche (1) selon l'une quelconque des revendications 1 à 3 **caractérisée en ce que** l'admission (19) comporte un tube débouchant sur le haut de la bâche (1) et plongeant vers le bas de cette dernière.

5. Bâche (1) selon l'une quelconque des revendications 1 à 4 **caractérisée en ce qu'**elle comporte un évent (18), un trop plein (20), un orifice de vidange (21), et une ou deux arrivée(s) supérieure(s) (22) de purge.

6. Bâche (1) selon l'une quelconque des revendications 1 à 5 **caractérisée en ce qu'**elle est en forme globale de parallélépipède verticalement allongé.

7. Bâche (1) selon l'une quelconque des revendications 1 à 6 **caractérisée en ce qu'**elle comporte une couche d'isolant thermique (9) externe.

## Patentansprüche

1. Gehäuse (1) eines Speichers für Hochtemperatur-Kondensate, wobei das Gehäuse mindestens Folgendes umfasst:
- eine Anordnung aus Einlass (10) und Auslass (11) zur Verbindung mit einem Wärmetauscher, wobei der Auslass (11) eine Übertragung der in dem Gehäuse (1) enthaltenen Kondensate zum Einlass des Wärmetauschers ermöglicht und der Einlass (10) eine Rückführung der Kondensate in das Gehäuse (1) ermöglicht,
- eine Ableitung (12), die das Ableiten mindestens eines Teils der in dem Gehäuse (1) enthaltenen Kondensate ermöglicht,
- Anschlüsse (15) für die Installation von mindestens einer Temperatursonde (16) und einer Pegelsonde (17), die das Messen der Temperatur T bzw. des Pegels N der in dem Gehäuse (1) enthaltenen Kondensate ermöglichen,
- einen Zugang (19) für Hochtemperatur-Kondensaten in dem Gehäuse (1), und
- eine Kontrolleinheit, die dazu konfiguriert ist, die Temperatur T zu steuern,
**dadurch gekennzeichnet, dass** die Kontrolleinheit dazu konfiguriert ist, die Temperatur T dank der dynamischen Steuerung des Pegels N durch das Überwachen der Ableitung (12) der Kondensate in Abhängigkeit von Folgendem zu steuern:
- der Energiezufuhr der Hochtemperatur-Kondensate, die durch den Zugang (19) eintritt,
- den Wärmeverlusten aufgrund der Rückführung von Kondensaten aus dem Wärmetauscher durch den Einlass (10) in das Gehäuse (1).

2. Gehäuse (1) nach Anspruch 1, **dadurch gekennzeichnet, dass** die Anordnung aus Einlass (10) und Auslass (11) und die Ableitung (12) im unteren Bereich des Gehäuses (1) angeordnet sind.

3. Gehäuse (1) nach einem der Ansprüche 1 oder 2, **dadurch gekennzeichnet, dass** die Ableitung (12) mit einer von der Kontrolleinheit gesteuerten Kondensatpumpe (13) verbunden ist.

4. Gehäuse (1) nach einem der Ansprüche 1 bis 3, **dadurch gekennzeichnet, dass** der Zugang (19) ein Rohr umfasst, das an der Oberseite des Gehäuses (1) mündet und in Richtung der Unterseite des letzteren verläuft.

5. Gehäuse (1) nach einem der Ansprüche 1 bis 4, **dadurch gekennzeichnet, dass** es eine Entlüftung (18), einen Überlauf (20), eine Abflussöffnung (21) und eine oder zwei obere Reinigungsdüsen (22) umfasst.

6. Gehäuse (1) nach einem der Ansprüche 1 bis 5, **dadurch gekennzeichnet, dass** es die allgemeine Form eines vertikal länglichen Parallelepipeds aufweist.

7. Gehäuse (1) nach einem der Ansprüche 1 bis 6, **dadurch gekennzeichnet, dass** es eine äußere Wärmeisolationsschicht (9) umfasst.

## Claims

1. A tank (1) for storing condensates at high temperatures, the tank including at least:
- an inlet (10) - outlet (11) assembly for connection to a heat exchanger, the outlet (11) enabling a transfer of the condensates contained in the tank (1) to the inlet of said heat exchanger and the inlet (10) enabling a return of the condensates in said tank (1),
- a discharge (12) allowing the discharge of at least part of the condensates contained in said tank (1),
- tappings (15) for placing at least one temperature probe (16) and a level probe (17) allowing measuring respectively the temperature T and the level N of the condensates contained in said tank (1),
- an intake (19) of high-temperature condensates in the tank (1), and
- a control unit configured to manage said temperature T, **characterized in that** the control unit is configured to manage said temperature T thanks to the dynamic management of the level N by controlling the discharge (12) of the condensates according to:
- the caloric inputs of the condensates at high-temperature entering through the intake (19), and
- heat losses due to the return in said tank (1) through the inlet (10) of the condensates coming from the heat exchanger.

2. The tank (1) according to claim 1, **characterized in that** the inlet (10) - outlet (11) assembly and the discharge (12) are arranged at the bottom of the tank (1) .

3. The tank (1) according to any one of claims 1 or 2, **characterized in that** the discharge (12) is connected to a lifting pump (13) controlled by the control unit.

4. The tank (1) according to any one of claims 1 to 3, **characterized in that** the intake (19) includes a tube opening onto the top of the tank (1) and immersed downwards of the latter.

5. The tank (1) according to any one of claims 1 to 4, **characterized in that** it includes a vent (18), an overflow (20), a drain orifice (21), and one or two upper purge inlet(s) (22).

6. The tank (1) according to any one of claims 1 to 5, **characterized in that** it has a vertically elongated parallelepiped general shape.

7. The tank (1) according to any one of claims 1 to 6, **characterized in that** it includes an outer heat insulator layer (9).
